(19) Europäisches Patentamt
European Patent Office
Office européen des brevets

(11) **EP 4 556 337 A1**

(12) **EUROPEAN PATENT APPLICATION**

(43) Date of publication:
**21.05.2025 Bulletin 2025/21**

(21) Application number: **23210822.5**

(22) Date of filing: **20.11.2023**

(51) International Patent Classification (IPC):
**B60W 40/08** (2012.01)

(52) Cooperative Patent Classification (CPC):
**B60W 40/08;** B60W 2040/0827; B60W 2520/10;
B60W 2520/105; B60W 2520/125; B60W 2540/10;
B60W 2540/12; B60W 2540/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Valeo Comfort and Driving Assistance
94000 Créteil (FR)**

(72) Inventors:
• **JAVANMARDI, Setareh
94000 Créteil (FR)**
• **CHELLALI, Mohamed-Zaki
94000 Créteil (FR)**
• **CHRETIEN, Clement
94000 Créteil (FR)**
• **GARCIA, Daniel
94000 Créteil (FR)**

(74) Representative: **Delplanque, Arnaud
Valeo Comfort and Driving Assistance
6 rue Daniel Costantini
94000 Créteil (FR)**

(54) **COMPUTER-IMPLEMENTED METHOD BASED ON A RANDOM FOREST MODEL TO DETECT A DROWSINESS STATE OF A DRIVER**

(57) The invention relates to a first computer-implemented method (1) to detect a state (st) of a driver of a vehicle among a drowsiness state (st1) and a non-drowsiness state (st2), wherein said first computer-implemented method (1) comprising:
- receiving as an input by a Random Forest model a first input dataset (D1) comprising features (f1) based on first data (d1),
- processing first samples (s1) of said features (f1) through a plurality of decision trees (T) of said Random Forest model (RF), said decision trees (T) comprising nodes (N) and corresponding hyperparameters (Hp),
- generating by said Random Forest model (RF) first outputs (O1) that are a classification of the driver's state (st) among the drowsiness state (st1) and the non-drowsiness state (st2).

Fig. 1

EP 4 556 337 A1

**Description**

TECHNICAL FIELD

The present invention relates to a first computer-implemented method to detect a state of a driver of a vehicle among a drowsiness state and a non-drowsiness state. Such a first computer-implemented method may be used, but not exclusively, in the automotive domain. The invention also relates to a second computer-implemented method of training a Random Forest model to classify a state of a driver of a vehicle into a drowsiness state or into a non-drowsiness state. The invention also relates to a third computer-implemented method of testing a Random Forest model to classify a state of a driver of a vehicle into a drowsiness state or into a non-drowsiness state.

BACKGROUND OF THE INVENTION

In the automotive domain, a first computer-implemented method to detect a state of a driver of a vehicle among a drowsiness state and a non-drowsiness state, well-known by the person skilled in the art, comprises:

- receiving by an electronic control unit of the vehicle a plurality of first data,
- upon some rules and said first data, deducing by the electronic control unit if the driver in a drowsiness state or in a non-drowsiness state.

Such first computer-implement method is implemented in a driver monitoring system also referred to as DMS. The data of the input dataset are :

- vehicle signals such as the speed of the vehicle, or acceleration of the vehicle, and
- facial features of the driver such as the eyes and eyelids, and/or
- biological signals of the driver such as the heart rate.

Some vehicle signals such as lane markings are acquired by a frontal exterior camera. The facial features are acquired by a camera inside the vehicle and the biological signals of the driver are acquired by a sensor that provides an electrocardiogram signal of the driver.

Based on a combination of these data, the first computer-implemented method detects if the driver is drowsy or not.

One problem of this prior art is that the detection is based on specific rules on different combinations of these first data which can be rather complex and costly due to the use of the camera and the sensor.

SUMMARY OF THE INVENTION

It is an object of the invention to provide a first computer-implemented method to detect a state of a driver of a vehicle among a drowsiness state and a non-drowsiness state, which resolves the problem above-stated.

To this end, it is provided a first computer-implemented method to detect a state of a driver of a vehicle among a drowsiness state and a non-drowsiness state, said first computer-implemented method comprising :

- receiving as an input by a Random Forest model a first input dataset comprising features based on first data,
- processing first samples of said features through a plurality of decision trees of said Random Forest model, said decision trees comprising nodes and corresponding hyperparameters,
- generating by said Random Forest model first outputs that are a classification of the driver's state among the drowsiness state and the non-drowsiness state.

As we will see in details later in the description, thanks to the use of the Random Forest model to detect the state of the driver, one doesn't need to implement complex combinations of rules to determine the state of a driver. Moreover, one doesn't need any more facial features or biological signals which reduces the complexity of the detection of the state of a driver, and thus one can suppress the camera in the vehicle's interior and the sensor for the biological signals so as to reduce the cost.

According to non-limitative embodiments of the invention, the first computer-implemented method to detect a state of a driver of a vehicle among a drowsiness state and a non-drowsiness state in accordance with the invention further comprises the following characteristics.

In a non-limitative embodiment, said first data are :

- a vehicle speed, and/or
- a vehicle steering wheel angle, and/or
- a vehicle brake pedal pressure, and/or
- a vehicle acceleration pedal pressure, and/or
- a vehicle lateral acceleration, and/or
- a vehicle position on a road lane.

In a non-limitative embodiment, said features computed are among :

- a first feature based on the vehicle speed that is a speed change rate,
- a second feature based on the vehicle speed that is a speed variation,
- a third feature based the vehicle steering wheel angle that is a steering wheel rotation amplitude,
- a fourth feature based on the vehicle steering wheel angle that is the steering wheel movements variation,
- a fifth feature that is based on the vehicle steering wheel angle that is a maximum energy applied on the steering wheel,

- a sixth feature based on the vehicle brake pedal pressure that is a brake pressure force mean,
- a seventh primary feature based on the vehicle brake pedal pressure that is the brake pressure rate,
- a eighth feature based on the vehicle brake pedal pressure rate that is the variations of pressure on the brake pedal,
- a ninth feature based on the vehicle acceleration pedal pressure that is a frequency of alternating between the brake and accelerator pedals,
- a tenth feature based on the vehicle accelerator pedal pressure rate that is the variations of pressure on the accelerator pedal,
- a eleventh feature based on the vehicle accelerator pedal pressure rate that is the mean force applied on the accelerator pedal,
- a twelfth feature based on the vehicle position on a road lane that is the vehicle position variations on the lane,
- a thirteenth feature based on the vehicle position on a road lane that is the mean vehicle position on the lane,
- a fourteenth feature based on the duration of the drive that is a timestamp.

In a non-limitative embodiment, said hyperparameters are:

- a maximum depth between 2 and 3,
- a minimum samples split set to 2,
- a minimum samples leaf set to 1,
- a maximum features set to 10,
- a maximum leaf nodes set to unlimited,
- a boostrap set to true,
- an oob_score set to false,
- a random seed set to 0,
- a number of jobs set to none,
- weights set to balanced,
- a number of trees set to 31,
- an optimization criterion set to Gini or Entropy.

In a non-limitative embodiment, said first computer-implemented method further comprises:

- acquiring a plurality of first outputs during a first filtering duration and,
- if the number of first outputs classified as drowsy is above a first filtering threshold, sending a first warning information.

The invention also relates to a second computer-implemented method of training a Random Forest model to classify a state of a driver of a vehicle into a drowsiness state or into a non-drowsiness state, said Random Forest model comprising a plurality of decision trees with nodes and corresponding hyperparameters, wherein said second computer-implemented method comprising:

- receiving by the Random Forest model as an input a second input dataset of training features, each training feature being based on training data,
- dividing by the Random Forest model said second input dataset into a plurality of subsets of features, said subsets of features comprising for each training feature a plurality of data subsamples and comprising second samples of training features that are annotated with a label defining a level of drowsiness,
- for each decision tree, random selecting by the Random Forest model a subset of feature and constructing said decision tree based on said subset of features,
- for each node of each constructed decision tree, selecting by the Random Forest model a training feature within the corresponding subset of features and a split threshold in order to minimize an optimization criterion,
- ending the construction of a decision tree when a pure node is attained when a maximum depth is attained.

In a non-limitative embodiment, the Random Forest model comprises a first node and for said first node, all the data subsamples of all the training features are selected.

In a non-limitative embodiment, said second input dataset of training features comprises at least two training features based on training second data among :

- a vehicle speed,
- a vehicle steering wheel angle,
- a vehicle brake pedal pressure,
- a vehicle acceleration pedal pressure
- a vehicle lateral acceleration,
- a vehicle position on a road lane.

In a non-limitative embodiment, said hyperparameters are:

- a maximum depth,
- a minimum samples,
- a minimum samples leaf,
- a maximum features,
- a maximum leaf nodes,
- a boostrap,
- an oob_score,
- a random seed,
- a number of jobs,
- weights,
- a number of trees,
- an optimization criterion.

In a non-limitative embodiment, said training features are among :

- a first training feature based on the vehicle speed that is a speed change rate,
- a second training feature based on the vehicle speed that is a speed variation,
- a third training feature based the vehicle steering wheel angle that is a steering wheel rotation amplitude,
- a fourth training feature based on the vehicle steering wheel angle that is the steering wheel movements variation,
- a fifth training feature that is based on the vehicle steering wheel angle that is a maximum energy applied on the steering wheel,
- a sixth training feature based on the vehicle brake pedal pressure that is a brake pressure force mean,
- a seventh training feature based on the vehicle brake pedal pressure that is the brake pressure rate,
- a eighth training feature based on the vehicle brake pedal pressure rate that is the variations of pressure on the brake pedal,
- a ninth training feature based on the vehicle acceleration pedal pressure that is a frequency of alternating between brake and accelerator pedals,
- a tenth training feature based on the vehicle accelerator pedal pressure rate that is the variations of pressure on the accelerator pedal,
- a eleventh training feature based on the vehicle accelerator pedal pressure rate that is the mean force applied on the accelerator pedal,
- a twelves training feature based on the vehicle position on a road lane that is the vehicle position variations on the lane,
- a thirteenth training feature based on the vehicle position on a road lane that is the mean vehicle position on the lane,
- a fourteenth training feature based on the duration of the drive that is a timestamp.

In a non-limitative embodiment, said label is a KSS label.

In a non-limitative embodiment, said second input dataset is split into folds according to a K-fold learning process.

In a non-limitative embodiment, one training feature is computed for each one of the training data.

In a non-limitative embodiment, one training feature is based on a plurality of training data.

In a non-limitative embodiment, for the drowsiness state, the corresponding KSS label is equal or greater than 7.

In a non-limitative embodiment, said second input dataset is split into folds according to a K-fold learning process, so as to obtain a first data subset to evaluate the Random Forest model, and a second data subset to train the Random Forest model according to the previous characteristics.

In a non-limitative embodiment, said first data subset that is used to evaluate the Random Forest model comprise one fold, and said second data subset that is used to train the Random Forest model comprises a plurality of folds.

In a non-limitative variant of embodiment, said second data subset that is used to train the Random Forest model comprises three folds.

In a non-limitative embodiment, the RF model is trained four times and is evaluated four times.

In a non-limitative embodiment, said hyperparameters are adjusted according to a genetic method.

In a non-limitative embodiment, the genetic method takes as species a set of hyperparameters.

In a non-limitative embodiment, the set of hyperparameters comprises :

- a maximum depth,
- a number of trees,
- a random seed set to 0
- an optimization criterion,
- a set of training features.

In a non-limitative embodiment, the genetic method has a fitness function that is based on a K-fold process on the second input database so as to obtain four AUCROC score metrics.

In a non-limitative embodiment, the fitness function is obtained by:

- keeping the AUCROC score metrics between 0.0 and 0.2,
- sorting the four AUCROC score metrics in an increasing order, and
- calculating the sum of the two middle AUCROC score metrics.

In a non-limitative embodiment, the genetic method uses a mutation function that is a random modification of one or multiple attributes of a species.

The invention also relates to a third computer-implemented method of testing a Random Forest model to classify a state of a driver of a vehicle into a drowsiness state or into a non-drowsiness state, said Random Forest model comprising a plurality of decision trees with nodes and corresponding hyperparameters, wherein said third computer-implemented method comprising:

- receiving a third input dataset of testing features, each testing feature being based on testing data,
- for each third sample of a plurality of testing features, processing said third sample through the plurality of decision trees of the Random Forest model so as to obtain one probability per each decision tree, a third sample comprising one subsample of each testing features and being annotated with a label defining a level of drowsiness,
- for each sample, computing a global probability as the mean probabilities of all the decision trees of the Random Forest model,

- for each third sample, comparing the global probability to a final threshold,
- upon said comparison, for each third sample, outputting a second output that is a prediction of the state of the driver,
- based on the second outputs obtained for all the third samples, calculate the area under the ROC curve metric.

The invention also relates to a fourth computer-implemented method of filtering the second outputs obtained from third computer-implemented method, wherein said fourth computer-implemented method comprises:

- acquiring the second outputs during a second filtering duration, and
- sending a second warning information if the number of second outputs are the drowsy state is above a second filtering threshold.

BRIEF DESCRIPTION OF THE FIGURES

Some embodiments of methods and/or apparatus in accordance with embodiments of the present invention are now described, by way of example only, and with reference to the accompanying drawings, in which:

Figure 1 is a schematic diagram that illustrates a first computer-implemented method to detect a state of a driver of a vehicle among a drowsiness state and a non-drowsiness state, said first computer-implemented method using a random forest model, according to a non-limitative embodiment of the invention,

Figure 2 illustrates a non-limitative embodiment of first data received by an electronic control unit of said vehicle during a step of said first computer-implemented method of figure 1, and a first input dataset of features that are computed based on said first data according to a non-limitative embodiment,

Figure 3 is a schematic diagram of a non-limitative embodiment of a second computer-implemented method of training a Random Forest Model to classify a state of a driver of a vehicle into a drowsiness state or into a non-drowsiness state, said Random Forest Model comprising a plurality of decision trees with nodes and corresponding hyperparameters,

Figure 4 illustrates a schematic diagram of a non-limitative embodiment of a decision tree of the Random Forest model used by the second computer-implemented method of figure 3,

Figure 5 illustrates a second input dataset of training features received by the Random Forest model that is trained according to said second computer-implemented method of figure 3, and training data from which the training features are computed,

Figure 6 illustrates a non-limitative example of subsets of features coming from the second input dataset of figure 5,

Figure 7a illustrates a non-limitative embodiment of a first part of a decision tree of the Random Forest model that is trained according to said second computer-implemented method of figure 3,

Figure 7b illustrates a non-limitative embodiment of a second part of the decision tree of figure 7a,

Figure 7c illustrates a non-limitative embodiment of a third part of the decision tree of figures 7a and 7b,

Figure 8 illustrates a schematic diagram of a non-limitative embodiment of a third computer-implemented method of testing the Random Forest Model that has been trained according to the second computer-implemented method of figure 3,

Figure 9 illustrates a third input dataset of testing features received by the Random Forest model that is tested according to said third computer-implemented method of figure 8, and testing data from which the testing features are computed,

Figure 10 illustrates a non-limitative example of an area under the Receiver Operating Characteristics curve obtained during the testing of the Random Forest model according to the third computer implemented method of figure 8,

Figure 11 illustrates a non-limitative example of a Confusion matrix to evaluate the Random Forest model that is tested according to the third computer implemented method of figure 8.

Figure 12 illustrates a schematic diagram of a non-limitative embodiment of a fourth computer-implemented method of filtering the results of the third computer-implemented method of figure 8,

Figure 13 illustrates a schematic non-limitative example of a k-folds table issued from a K-fold learning process applied on a second input dataset used by the second computer-implemented method of figure 3,

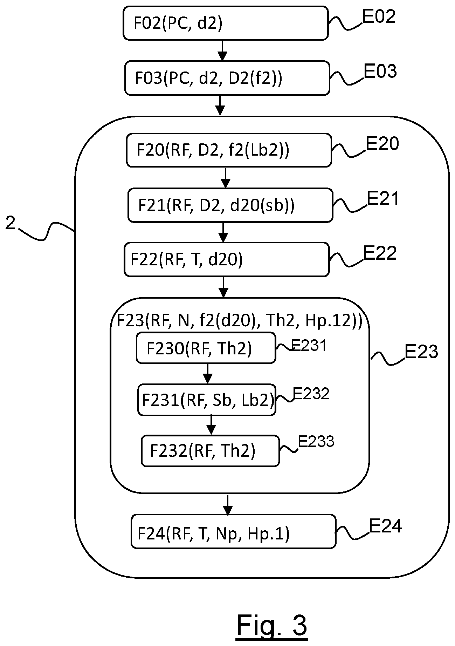

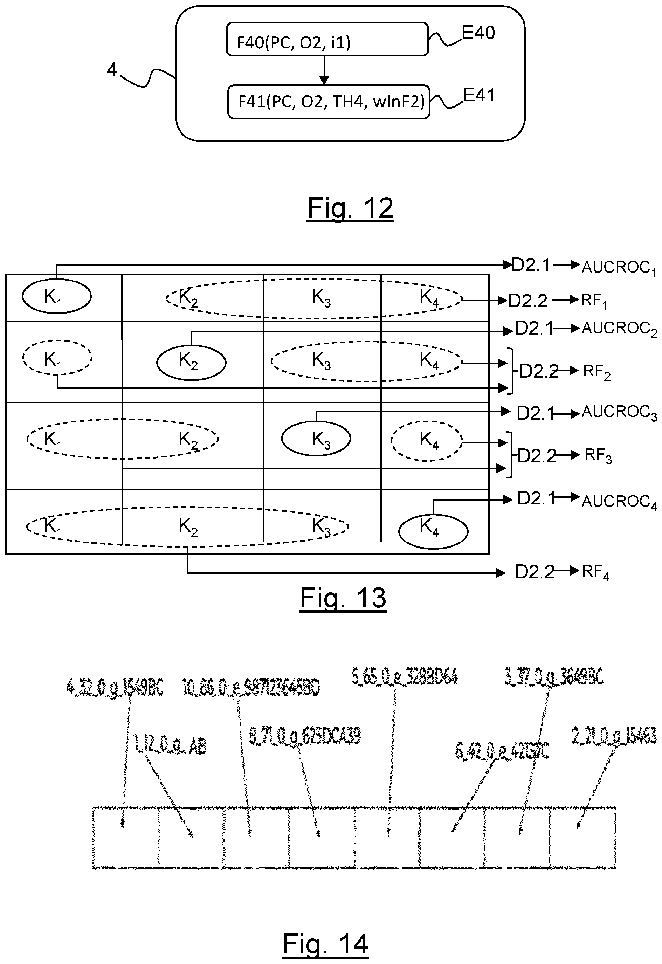

Figure 13 illustrates non-limitative examples of species that are used as an input for a genetic method to adjust the hyperparameters of the RF model trained by the second computer-implemented method of figure 3.

DESCRIPTION OF EMBODIMENTS OF THE INVENTION

In the following description, well-known functions or constructions by the man skilled in the art are not described in detail since they would obscure the invention in unnecessary detail.

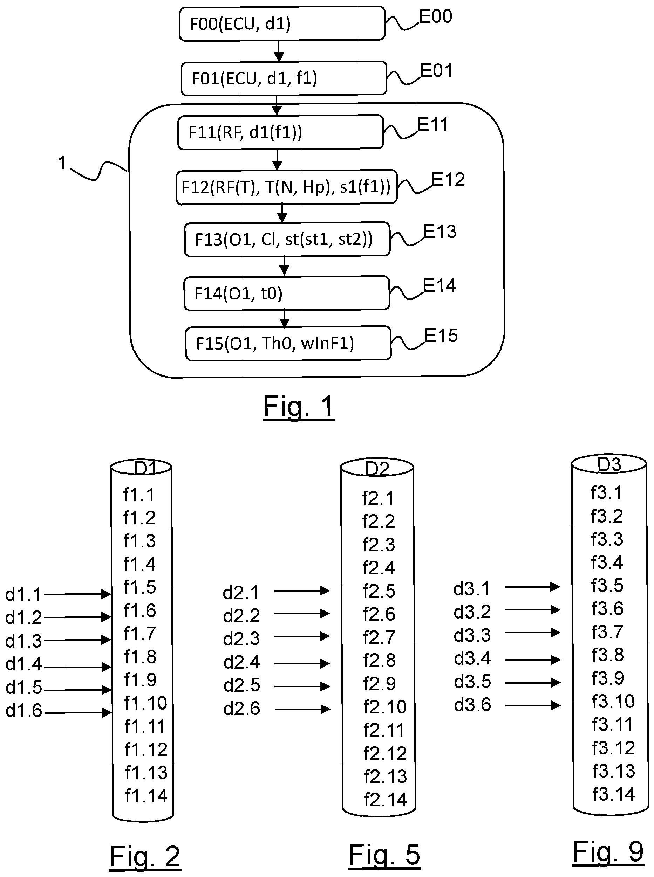

The present invention relates to a first computer-implemented method 1 to detect a state st of a driver of a vehicle among a drowsiness state st1 and a non-drowsiness state st2, said first computer-implemented method 1 being described in reference to figure 1 and 2, according to non-limitative embodiments.

In non-limitative embodiments, the vehicle is a motor vehicle, an electrical vehicle or a hybrid vehicle. The vehicle comprises an electronic control unit ECU.

The first computer-implemented method 1 is based on a Random Forest model also referred to as RF model in the following. In a non-limitative embodiment, the first computer-implement method 1 is executed by the electronic control unit ECU. Therefore, the Random Forest model is run on said electronic control unit ECU. When it is run, the Random Forest model is called the inference RF model or simply inference model.

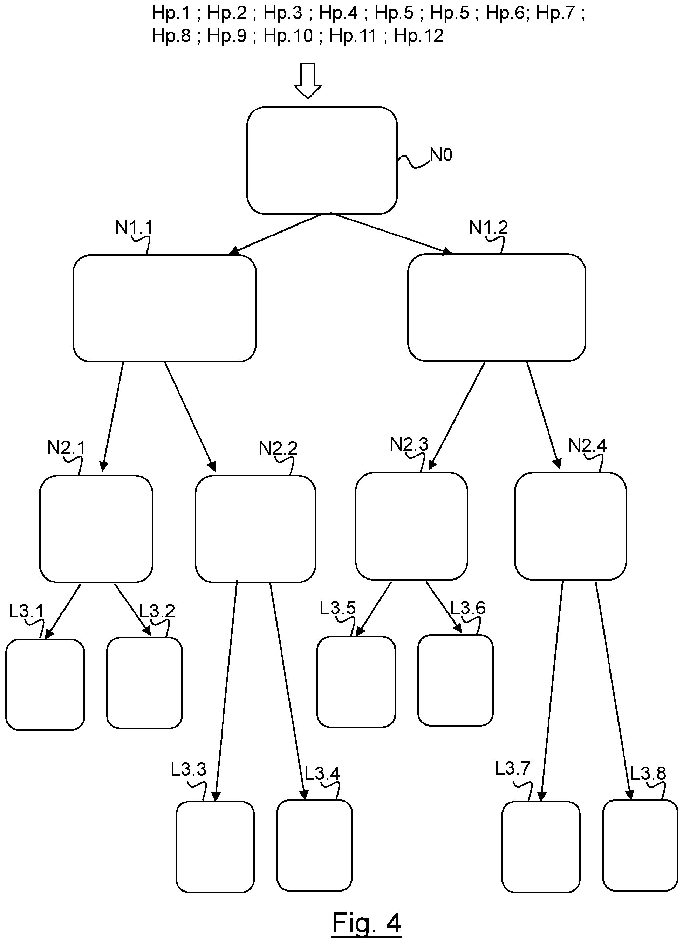

The RF model is composed of a plurality of decision trees T, each decision tree T comprising a plurality of nodes N and ending-up with terminal nodes called leaves L. In a non-limitative embodiment, the RF model comprises thirty two decision trees T. The RF model comprises a first node referred to as node N0 in figure 4.

The first computer-implemented method 1 comprises the following steps described in figure 1 according to a non-limitative embodiment. As we will see, the RF model uses features f1 based on first input data d1 to be processed through its decision trees T.

The first input data d1 are received by the electronic control unit ECU in a prior step E00 illustrated F00(ECU, d1) illustrated in figure 1. They are also called first data d1 in the following. The first input data d1 are raw data. In a non-limitative embodiment, the first input data d1 are signals transmitted by a Controller Area Network of the vehicle when the vehicle is moving, also called CAN, to the electronic control unit ECU.

In a non-limitative example, there are six first input data d1 as illustrated in figure 2.

The first input data d1 are of the type :

- a vehicle speed referred to as d1.1, and/or
- a vehicle steering wheel angle referred to as d1.2, and/or
- a vehicle brake pedal pressure referred to as d1.3, and/or
- a vehicle acceleration pedal pressure referred to as d1.4, and/or
- a vehicle lateral acceleration of the vehicle referred to as d1.5, and/or
- a vehicle position on a road lane referred to as d1.6.

In a non-limitative embodiment, the first input data d1 is of the type of a timestamp.

In a non-limitative embodiment, the electronic control unit ECU receives at least two first data d1 of different types.

The electronic control unit ECU then computes the features f1 based on the first data d1 received as illustrated in a step E01 illustrated F01 (ECU, d1, f1) in figure 1.

As illustrated in figure 2, in a non-limitative embodiment, the features f1 computed are among :

- a first feature f1.1 based on the vehicle speed that is a speed change rate. It can show the frequency of abrupt speed changes ;
- a second feature f1.2 based on the vehicle speed that is a speed variation,
- a third feature f1.3 based the vehicle steering wheel angle that is a steering wheel rotation amplitude;
- a fourth feature f1.4 based on the vehicle steering wheel angle that is the steering wheel movements variation. It can show if during a certain time duration, there are many variations or not ;
- a fifth feature f1.5 that is based on the vehicle steering wheel angle that is the sum of the different angles of the steering wheel turns ;
- a sixth feature f1.6 based on the vehicle brake pedal pressure that is a brake pressure force mean;
- a seventh primary feature f1.7 based on the vehicle brake pedal pressure that is the brake pressure rate. It can show the frequency of brake pressure ;
- a eighth feature f1.8 based on the vehicle brake pedal pressure rate that is the variations of pressure on the brake pedal ;
- a ninth feature f1.9 based on the vehicle acceleration pedal pressure that is a frequency of alternating between the brake and accelerator pedals,
- a tenth feature 1.10 based on the vehicle accelerator pedal pressure rate that is the variations of pressure on the accelerator pedal,
- a eleventh feature f1.11 based on the vehicle accelerator pedal pressure rate that is the mean force applied on the accelerator pedal,
- a twelfth feature f1.12 based on the vehicle position on a road lane that is the vehicle position variations on the lane,
- a thirteenth feature f1.13 based on the vehicle position on a road lane that is the mean vehicle position on the lane,
- a fourteenth feature f1.14 based on the timestamp that is the duration of the drive. It is to be noted that this fourteenth feature f1.14 is interesting as the more a driver drives, the more he/she is likely to fall asleep.

In this non-limitative embodiment, a feature f1 that is computed is based on one first data d1. In another non-limitative embodiment, a feature f1 that is computed is based on a plurality of first data d1. For example, the number of lane variations is computed based on the vehicle position on a road lane and on a blinker signal.

After the computation of the features f1, the first computer-implemented method 1 can be executed. It comprises the following steps.

In step E11 illustrated F11(RF, D1(f1)) in figure 1, the Random Forest model receives from the electronic control unit ECU a first input dataset D1 that comprises the features f1.

In step E12 illustrated F12(RF(T), T(N, Hp), s1(f1)) in figure 1, first samples s1 of features f1 are processed through the plurality of decision trees T of said RF model.

A first input dataset D1 is split into a plurality of first samples s1 by the electronic control unit ECU. A first sample s1 comprises different types of features f1 mentioned before. In a non-limitative embodiment, the number of features f1 per sample s1 is random and the grouping is performed randomly.

The decision trees T comprises nodes N and have corresponding hyperparameters Hp as illustrated in figure 4.

In a non-limitative embodiment, as illustrated in figure 4, the hyperparameters Hp are:

- a maximum depth between 2 and 3 referred to as Hp.1,
- a minimum samples split set to 2 referred to as Hp.2,
- a minimum samples leaf set to 1 referred to as Hp.3,
- a maximum features set to 10 referred to as Hp.4,
- a maximum leaf nodes set to unlimited referred to as Hp.5,
- a boostrap set to true referred to as Hp.6,
- an oob_score set to false referred to as Hp.7,
- a random seed set to 0 referred to as Hp.8,
- a number of jobs set to none referred to as Hp.9,
- weights set to balanced referred to as Hp.10,
- a number of decision trees set to 31 referred to as Hp.11.
- an optimization criterion set to Gini Index (also called Gini) or to Entropy Index (also called Entropy) referred to as Hp.12.

In a non-limitative variant of embodiment, the optimization criterion is set to Gini.

These hyperparameters Hp have been set so that the objective of detecting the state st of the driver with good performances is attained.

A non-limitative example of decision tree T of the RF model is illustrated in Figure 4. The decision tree T comprises fifteen nodes N. It comprises a maximum depth equal to three, an initial node N0 and has two children nodes for one parent node. It is to be noted that different decision trees T can have the same maximum depths or different maximum depths.

Hence, for the initial node N0, there are two children nodes N1.1 and N1.2. These nodes are parent nodes for respectively two other nodes N2.1, N2.2 (for N1.1) and N2.3, N2.4 (for N1.2). These four nodes N2.1, N2.2, N2.3, N2.4 are each a parent node for two nodes that are the last nodes and that are called leaves and referred to as L :

- N2.1 is a parent node for the leaves L3.1 and L3.2,
- N2.2 is a parent node for the leaves L3.3 and L3.4,
- N2.3 is a parent node for the leaves L3.5 and L3.6,
- N2.4 is a parent node for the leaves L3.7 and L3.8.

It is to be noted that when a first sample s1 is processed through the plurality of decision trees T, there is only one path in each decision tree T that is taken until a leaf L is attained. A leaf L results in a probability to be in class Cl.0 and in a probability to be in class Cl.1.

In step E13 illustrated F13(O1, Cl, st(st1, st2))) in figure 1, the Random Forest model generates first outputs O1 that are a classification Cl of the driver's state st among a drowsiness state st1 and the non-drowsiness state st2. Hence, there are two classes : Cl.0 = drowsy, and Cl.1 = non-drowsy. The first output O1 represents one of the two classes Cl.0, Cl.1. Hence, for each first sample s1, one generates one first output O1 that is a classification Cl of the driver's state st.

According to the classifications, a decision can be taken. In a non-limitative example, if the driver's state st is classified as the drowsy state st1, a first warning information wInF1 can be sent by the electronic control unit ECU to a human machine interface to warn the driver to stop driving and take some rest. In non-limitative examples, the first warning information wInF1 can be an audible message or a message on a screen or a combination of both.

Hence, the Random Forest model permits to take into account a huge amount of first data d1 and thus a huge amount of features f1 that a classical driver monitoring system can't.

In order to be sure of the state st of the driver, a filtering on the classifications is performed as follows.

In a non-limitative embodiment illustrated in figure 1, the first computer-implemented method 1 further comprises :

- in step E14 illustrated F14(O1, t0), acquiring a plurality of first outputs O1 during a first filtering duration t0, and
- in step E15 illustrated F15(O1, Th0, wInF1), if the number of first outputs O1 classified as drowsy is above a first filtering threshold Th0, sending the first warning information wInF1.

In a non-limitative embodiment, the first filtering duration t0 is equal to 13.4 seconds. In a non-limitative embodiment, the first filtering threshold Th0 is equal to 67.

Hence, these further steps ensure that the driver is really drowsy, as one waits for a plurality of confirmations of the first output O1 to be the drowsy class Cl.0. These further steps are performed by the electronic control unit ECU.

In order to use the Random Forest model as an inference model to detect if a driver is drowsy or not as described above, one has to train the RF model.

The training (also called training phase in the following) is described in detail in the following.

Figure 3 illustrates a second-computer implemented method 2 of training a Random Forest model to classify a state st of a driver of a vehicle into a drowsiness state st1 or into a non-drowsiness state st2.

As above-mentioned, the RF model comprises a plurality of decision trees T with nodes N and corresponding hyperparameters Hp.

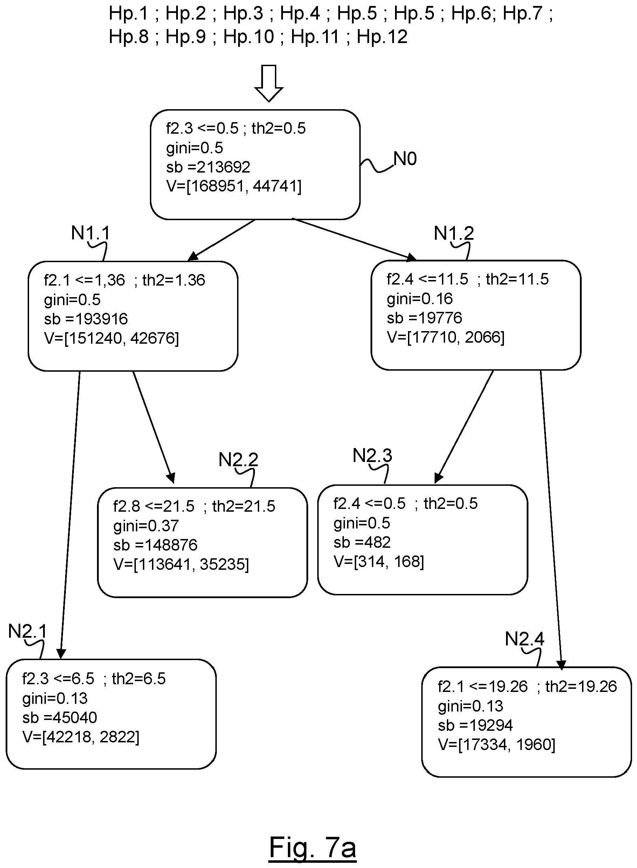

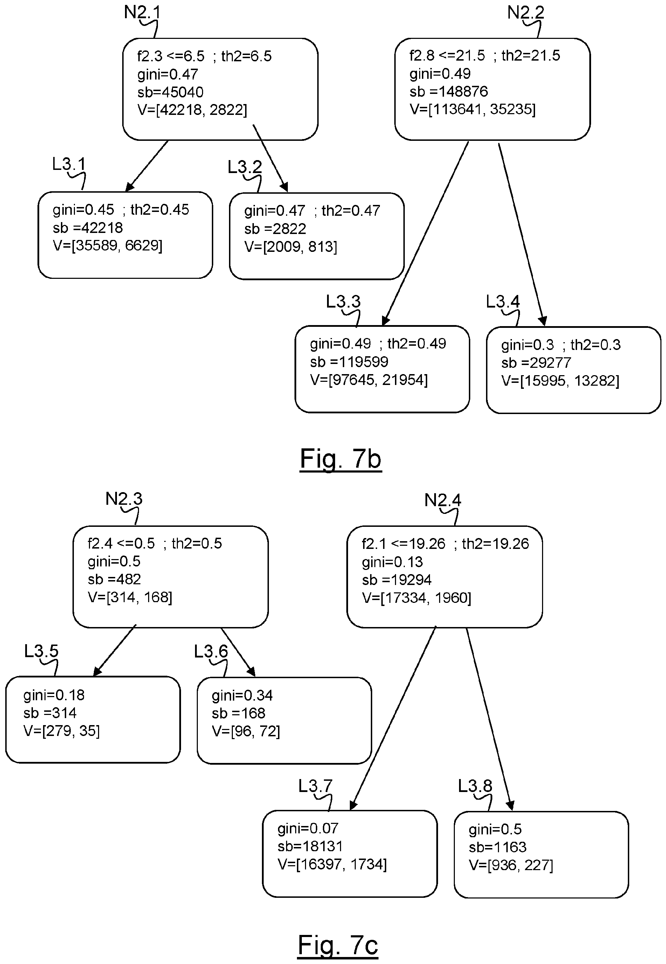

As illustrated in figures 7a to 7c, in a non-limitative embodiment, the maximum depth of a decision tree T is 3, the decision tree T comprises the six nodes N0, N1.1 to N2.4 as mentioned before in figure 4 and comprises eight leaves L3.1 to L3.8 as mentioned before in figure 4.

In a non-limitative embodiment, the hyperparameters Hp for the training are :

- a maximum depth referred to as Hp.1,
- a minimum samples referred to as Hp.2,
- a minimum samples leaf referred to as Hp.3,
- a maximum features referred to as Hp.4,
- a maximum leaf nodes referred to as Hp.5,
- a boostrap referred to as Hp.6,
- an oob_score referred to as Hp.7,
- a random seed referred to as Hp.8,
- a number of jobs referred to as Hp.9,
- weights referred to as Hp.10,
- a number of trees referred to as Hp.11,
- an optimization criterion referred to as Hp.12.

In a non-limitative embodiment, the optimization criterion is the Gini Index or the Entropy index. In a non-limitative variant of embodiment, the optimization criterion is the Gini index.

It is to be noted that the hyperparameters Hp are the same as the ones for the model inference when running the RF model in the first computer-implemented method 1.

The RF model is trained according to a second input dataset D2 of training features f2.

The training features f2 are based on training data d2. The training data d2 are raw data. In a non-limitative embodiment, the training data d2 are signals transmitted by the Controller Area Network vehicle, also called CAN.

In a non-limitative example, there are six training data d2 as illustrated in figure 5.

The training data d2 are of the type :

- a vehicle speed referred to as d2.1, and/or
- a vehicle steering wheel angle referred to as d2.2, and/or
- a vehicle brake pedal pressure referred to as d2.3, and/or
- a vehicle acceleration pedal pressure referred to as d2.4, and/or
- a vehicle lateral acceleration of the vehicle referred to as d2.5, and/or
- a vehicle position on a road lane referred to as d2.6.

In a non-limitative embodiment, an electronic device PC, which is different from the electronic control unit ECU of the vehicle, receives at least two training data d2 of different types. In a non-limitative embodiment, the electronic device PC is a personal computer or a server.

In a non-limitative embodiment, the training data d2 have been acquired according to 146 drivers' sessions of 73 drivers driving under the drowsiness state st1 and the non-drowsiness state st2. Each driver has two sessions, one under drowsiness, and one under non-drowsiness.

In a non-limitative embodiment, the duration of a driver's session is about 90 minutes, and training data d2 have been acquired each 200 milliseconds. It is to be noted that 90 minutes is a mean duration. Some sessions last up to 120 minutes, others are not more than 70 minutes. These are durations required to make a round-trip on a driving circuit. In the case of a 90 minutes of 146 driver's sessions, there are about 4 million training data d2.

It is to be noted that these training data d2 are received by an electronic device PC different from the electronic control unit ECU of the vehicle, such as a personal computer or a server. Hence, as illustrated in a prior step E02 illustrated F02(PC, d2) in figure 3, the electronic device PC receives said training data d2. It is to be noted that the training features f2 are computed by this electronic device PC. Hence, in a step E03 illustrated F03(PC, d2, D2(f2)) in figure 3, this electronic device PC computes the different training features f2 based on the training data d2 it has received.

After the computation of the training features f2, the second computer-implemented method 2 of training a Random Forest model can be executed. It comprises the following steps.

In step E20 illustrated F20(RF, D2, f2(Lb2)) in figure 3, the RF model receives as an input a second input dataset D2 of training features f2. A non-limitative example of part of the second input dataset D2 is illustrated in figure 5.

The training features f2 are grouped into second samples s2 that are annotated with a label Lb2 (also called first label Lb2) defining a level of drowsiness. In a non-limitative embodiment, the label Lb2 is a KSS level (Karolinska Sleepiness Scale). The KSS level varies between 1 and 9. For the training phase, the label Lb2 is binarized so as to obtain a level corresponding to a class drowsy Cl.0 and not drowsy Cl.1. The same goes for a testing phase explained later in the following. It is to be noted that the annotation is done manually by a human operator.

The training features f2 are also referred to as observations. In a non-limitative embodiment, there are 499739 of total observations. This number is experimental. In a non-limitative embodiment, there are 18.8% of observations that are labeled drowsy and 81.2% of observations that are labeled non-drowsy. Hence, in the non-limitative embodiment of 499739 of total observations, there are 94057 "drowsy" observations.

In a non-limitative embodiment, for the drowsiness state st1, the corresponding KSS label is equal or greater than 7. Thus, for the non-drowsiness state st2, the corresponding KSS label is below 7.

In a non-limitative embodiment, the second input dataset D2 of training features f2 comprises at least two training features f2 based on the training data d2.

In a non-limitative embodiment, said training features f2 are among which:

- a first training feature f2.1 based on the vehicle speed that is a speed change rate,
- a second training feature f2.2 based on the vehicle speed that is a speed variation,
- a third training feature f2.3 based the vehicle steering wheel angle that is a steering wheel rotation amplitude,
- a fourth training feature f2.4 based on the vehicle steering wheel angle that is the steering wheel movements variation,
- a fifth training feature f2.5 that is based on the vehicle steering wheel angle that is a maximum energy applied on the steering wheel,
- a sixth training feature f2.6 based on the vehicle brake pedal pressure that is a brake pressure force mean,
- a seventh training feature f2.7 based on the vehicle brake pedal pressure that is the brake pressure rate,
- a eighth training feature f2.8 based on the vehicle brake pedal pressure rate that is the variations of pressure on the brake pedal,
- a ninth training feature f2.9 based on the vehicle acceleration pedal pressure that is a frequency of alternating between brake and accelerator pedals,
- a tenth training feature f2.10 based on the vehicle accelerator pedal pressure rate that is the variations of pressure on the accelerator pedal,
- a eleventh training feature f2.11 based on the vehicle accelerator pedal pressure rate that is the mean force applied on the accelerator pedal,
- a twelves training feature f2.12 based on the vehicle position on a road lane that is the vehicle position variations on the lane,
- a thirteenth training feature f2.13 based on the vehicle position on a road lane that is the mean vehicle position on the lane,
- a fourteenth training feature f2.14 based on the duration of the drive that is a timestamp.

In step E21 illustrated F21(RF, D2, d20(sb)) in figure 3, the Random Forest model RF divides the second input dataset D2 into a plurality of subsets of features d20 that comprise for each training feature f2 a plurality of data subsamples sb. In a non-limitative embodiment, the division is randomly performed. Each subset of features d20 comprises second samples s2 annotated with label Lb2 defining a level of drowsiness. Each second sample s2 comprises a plurality of training features f2 and so a plurality of data subsamples sb per training feature f2.

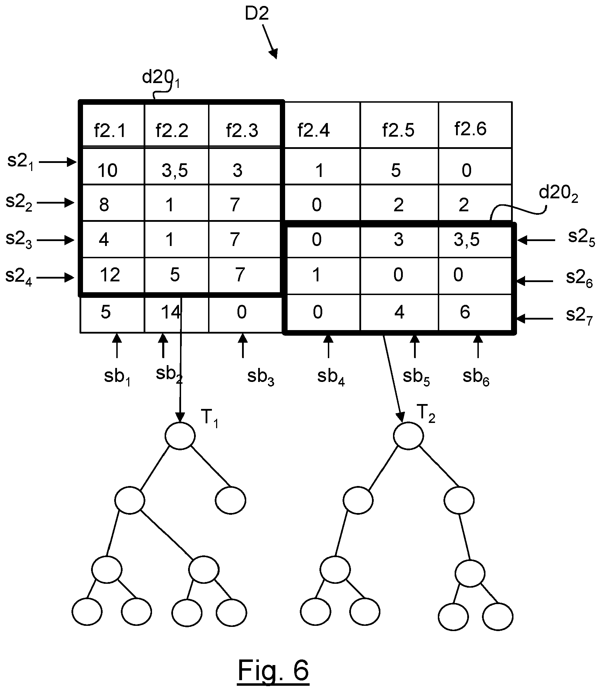

Figure 6 illustrates a non-limitative example of part of a second input dataset D2 based on six training features f2 and two subsets of features $d20_1$, $d20_2$. The first subset of features $d20_1$ comprises the training features f2.1, f2.2 and f2.3. The second subset of features $d20_2$ comprises the training features f2.4 to f2.6. Each training feature f2.1 to f2.6 comprises five subsamples respectively referred to as $sb_1$ to $sb_6$. For example, training feature f2.1 comprises five subsamples $sb_1$ whose values are 10, 8, 4, 12 and 5. Moreover, the first subset of features $d20_1$ comprises four second samples $s2_1$ to $s2_4$, and the second subset of features $d20_2$ comprises three second samples $s2_5$ to $s2_7$.

In step E22 illustrated F22(RF, T, d20) in figure 3, for each decision tree T (to be constructed), the RF model selects a subset of feature d20 and constructs said decision tree T based on said subset of features d20. In a non-limitative embodiment, the subsets of features d20 are distributed between the different decision trees T randomly. Hence, some decision trees T can receive as input a same subset of features d20.

As illustrated in the non-limitative example, the first subset of features $d20_1$ is selected to construct a first decision tree $T_1$, and the second subset of features $d20_2$ is selected to construct a second decision tree $T_2$.

In step E23 illustrated F23(RF, N, f2(d20), Th2, Hp.12)) in figure 3, for each node N of each constructed decision tree T, the RF model selects a training feature f2 within the corresponding subset of features d20 and selects a split threshold Th2 in order to minimize the optimization criterion Hp.12. The split threshold Th2 is chosen by the RF model according to the samples s2. For example, to construct a tree T based on the subset of features $d20_1$, for feature f2.1, the split threshold Th2 is based on the samples s2 = 10, 8, 4 and 12 illustrated in figure 6.

This leads to a split of the subsamples sb of the training feature f2, between the drowsiness state and the non-drowsiness state. Minimizing the optimization criterion Hp.12 means that the most of subsamples sb are classified in the right class (Cl.0 or Cl.1) according to the label Lb2 corresponding to the training features f2.

When the RF model selects a training feature f2, it means that it selects all the subsamples sb of said training feature f2. Said subsamples sb are inputs to a node N.

As illustrated in figure 3, the selection of the split threshold Th2 comprises :

- a sub-step E230 illustrated F230(RF, Th2) of selecting by the RF model a plurality of split-thresholds Th2, and
- a sub-step E231 illustrated F231(RF, sb, Lb2) of, for each split threshold Th2, verifying by the RF model if the subsamples sb have been classified according to the corresponding label Lb2 of their second samples s2,
- a sub-step E232 illustrated F232(RF, Th2) of selecting by the RF model the best split threshold Th2 where the most subsamples sb have been classified according to the corresponding label Lb2.

In the non-limitative given example the optimization criterion Hp.12 is the Gini index.

Figures 7a to 7c illustrates the training features f2 selected for each node N of a decision tree T, the split thresholds Th2, and the number of subsamples sb for each selected training feature f2.

In the non-limitative example of figure 7a, for the node N1.1, the training feature selected is f2.1, the split threshold Th2 is 1.36 and the training feature f2.1 gives a Gini of 0.5. The number of subsamples sb is 193916. The reference V in the figure is referred to as the split of subsamples between the non-drowsiness state st2 and the drowsiness state st1. In the non-limitative given example, training feature f2.1 is the speed change rate. If the training feature f2.1 is lower than 1.36, one obtains the split V of subsamples as illustrated.

Here for the node N1.1, there are 151240 subsamples sb among 193916 that are classified as non-drowsy, and 151240 among 193916 that are classified as drowsy.

In this non-limitative example, the probability to be in the class non-drowsy Cl.1 is here 151240/193916. The probability to be in the class drowsy Cl.0 is here 42676/193916. Hence, the probability to be in the class non-drowsy Cl.1 is the first subsamples of the split and the probability to be in the class drowsy Cl.0 is the second subsamples of the split.

The Gini Index equal to :

[Math 1]

$$1 - \sum_j P_j^2$$

With P the probability, and j the number of classes, here the classes Cl.0 and Cl.1.

It is to be noted that the Entropy index equal to:

[Math 2]

$$1 - \sum_j P_j . \log_2 P_j$$

The step E23 is repeated for the following nodes N. In the non-limitative given example, the step E23 is repeated for the two following nodes N2.1 and N2.2. For node N2.1, the feature selected is f2.3, the split threshold is 6.5 and training feature f2.3 gives a Gini of 0.13. For node N2.2, the feature selected is f2.8, the split threshold is 21.5 and training feature f2.8 gives a Gini of 0.37.

In step E24 illustrated F24(RF, T, Np, Hp.1) in figure 3, the RF model ends the construction of a decision tree T when a pure node Np is attained or when a maximum depth Hp.1 is attained. A pure node Np is when the Gini equals 0. It means the split of the subsamples sb is performed without error: the subsamples sb classified as non-drowsiness state st2 have the corresponding label Lb2 non-drowsiness, and the subsamples classified as drowsiness state st1 have the corresponding label Lb2 drowsiness.

In the non-limitative given example of figures 7a to 7c, the maximum depth Hp.1= 3 has been attained.

The training phase of the RF model stops when all the decision trees T are constructed.

Once the training is performed, there is a testing phase that tests the classification of the state st of a driver of a vehicle by said Random Forest model. The testing phase is performed by a third computer-implemented method 3. It is to be noted that this third-computer implemented method 3 is independent from the second computer-implemented method 2 or can be part of the second-computer implemented method 2.

The RF model is tested according to a third input dataset D3 of testing features f3. The testing features f3 are based on testing data d3. The testing data d3 are raw data. In a non-limitative embodiment, the testing data d3 are signals transmitted by the Controller Area Network vehicle, also called CAN.

The testing features f3 are of the same type as the training features f2. Hence, the same non-limitative list can be applied here (speed rate change, speed variation etc.). They are based on testing data d3 that are of the same type as the training data d2. Hence, the same non-limitative list can be applied here (vehicle speed, vehicle steering wheel angle etc.).

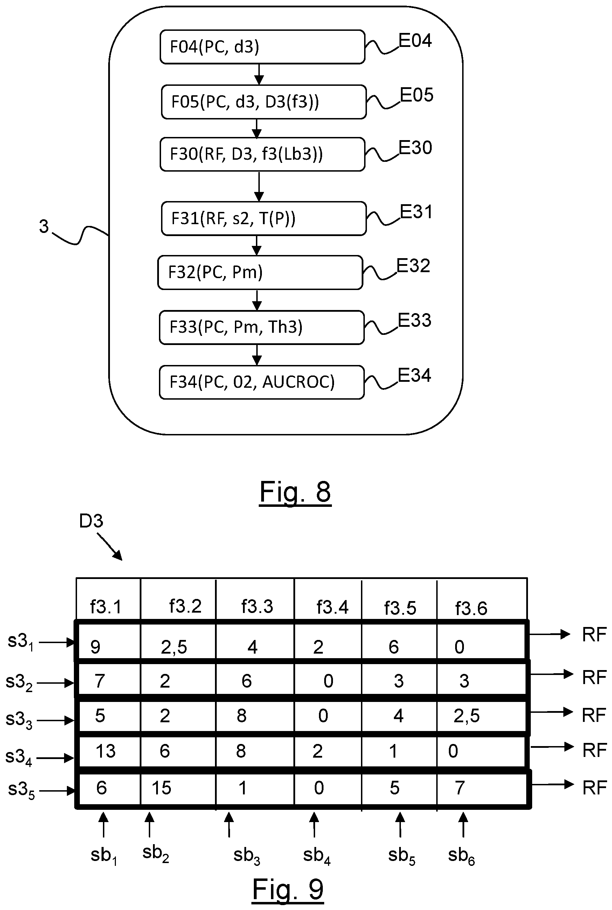

The third computer-implemented method 3 comprises the following steps as illustrated in figure 8.

In the same manner as the training data d2, these testing data d3 are received by an electronic device PC different from the electronic control unit ECU of the vehicle, such as a personal computer or a server. Hence, in step E04 illustrated F04(PC, d3) in figure 8, the electronic device PC receives said testing data d3.

In the same manner as the training features f2, the testing features f3 are computed by this electronic device PC. Hence, in a step E05 illustrated F05(PC, d3, D3(f3)) in figure 8, this other electronic device PC computes the different testing features f3 based on the testing data d3 it has received.

In a non-limitative embodiment, the testing data d3 have been acquired according to 44 driver's sessions of 22 drivers driving under the drowsiness state st1 and the non-drowsiness state st2 and the third input dataset comprises testing features computed from said acquired testing data.

In step E30 illustrated F30(RF, D3, f3(Lb3)) in figure 8, the RF model receives as an input a third input dataset D3 of testing features f3. In a non-limitative embodiment, the third input dataset D3 of testing features f3 comprises at least two testing features f3 of different types.

As illustrated in figure 9, in the same manner as the second input dataset D2, the third input dataset D3 comprises for each testing feature f3 a plurality of data subsamples sb. The third dataset D3 is split into third samples s3 of testing features f3.

In step E31 illustrated F31(RF, s2, T(P)) in figure 8, the Random Forest model RF processes each third sample s3 of the third input dataset D3 through each of its decision tree T so as to obtain one probability P for each decision tree T. As illustrated in figure 9, one third sample s3 comprises one subsample sb of each testing features f3. In a non-limitative embodiment, each third sample s3 is annotated with a label Lb3 (also called second label Lb3) defining a level of drowsiness. In a non-limitative embodiment, the label Lb3 is a KSS label.

A non-limitative example of part of the third input dataset D3 is illustrated in figure 9. It illustrated testing features f3.1 to f3.6 with each six subsamples $sb_1$ to $sb_6$ and five samples $s3_1$ to $s3_5$. Each third sample $s3_1$ to $s3_5$ comprises six subsamples $sb_1$ to $sb_6$ of respectively testing features f3.1 to f3.6. For example for the third sample $s3_1$ :

- the testing features f3.1 comprises a subsample $sb_1$ whose value is 9,
- the testing features f3.2 comprises a subsample $sb_2$ whose value is 2, 5
- the testing features f3.3 comprises a subsample $sb_3$ whose value is 4,
- the testing features f3.4 comprises a subsample $sb_4$ whose value is 2,
- the testing features f3.5 comprises a subsample $sb_5$ whose value is 6,
- the testing features f3.6 comprises a subsample $sb_6$ whose value is 0.

It is to be noted that each node N of the RF model will receive one subsample sb of only one testing feature f3.

It is to be noted that when a third sample s3 is processed through one decision tree T, there is only one path in the decision tree that is taken until a leaf L is attained. A leaf L results in a probability to be in class Cl.0 and in a probability to be in class Cl.1.

Hence, for one third sample s3, each decision tree T gives a probability P, also called class probability P, of being drowsy or not. It is to be reminded that the probability is given by the termination of a decision tree T, that is to say by a leaf L. The probability P is the probability that the driver is in the drowsiness state or the non-drowsiness state.

In step E32 illustrated F32(PC, Pm) in figure 8, for each third sample s3, one computes a global probability Pm that is the mean of all the probabilities P obtained for each third sample s3. The computation is performed by an electronic device PC (different from the electronic control unit ECU of the vehicle) such as a personal computer or a server. The global probability Pm is also called global drowsiness probability Pm.

In step E33 illustrated F33(RF, Pm, Th3) in figure 8, for each third sample s3, one compares the global probability Pm to a final threshold Th3 to determine if the third sample s3 is classified in the drowsy class Cl.0 or a non-drowsy class Cl.1, and one outputs for each third sample s3 a second output O2 that is a prediction on the state st of the driver as a drowsiness state st1 or a non-drowsiness state st2. In a non-limitative embodiment, the final threshold Th3 is set to 0.72. The comparison is performed by the electronic device PC.

In step E34 illustrated F34(PC, 02, AUCROC) in figure 8, based on the second outputs O2 obtained for all the third samples s3, one calculates the area under the ROC curve score metric. This calculation is performed by the electronic device PC.

It is to be reminded that the ROC means Receiver Operating Characteristics. The area under the ROC curve score metric is also referred to as AUC. The whole is also referred to as AUCROC curve score metric or AUCROC score metric.

The AUC illustrates the degree of separability between the two classes drowsiness and non-drowsiness. It permits to tell how much the RF model is able to distinguish between the two classes. The higher the AUC is, the better the RF model is at predicting the right class, and hence at predicting the state st of the driver. Hence, the more the AUC is near 1, the better the RF model is capable of predicting that the driver is in a the drowsiness state st1 when he is really is drowsy, and the better the RF model is capable of predicting that the driver is in a non-drowsiness state st2 when he is really awoken.

If the outcome of a third sample s3 is drowsiness and the current label Lb3 annotated with the third sample s3 is drowsiness, then it is called true positive. However, if the outcome of a third sample s3 is drowsiness but the current label Lb3 of the third sample s3 is the non-drowsiness, then it is called false positive.

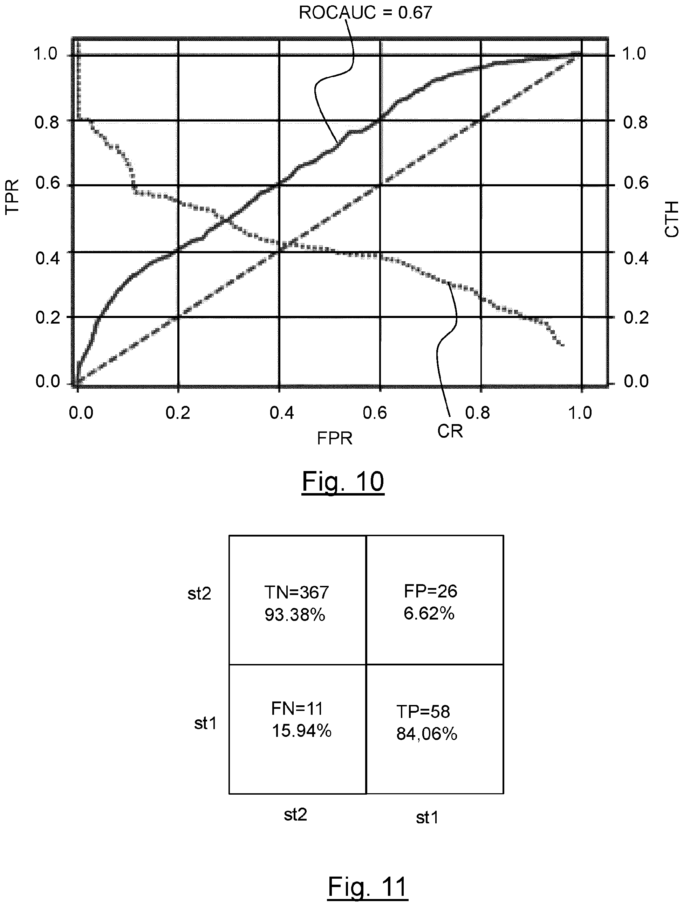

Figure 10 illustrates an area under the ROC metric obtained with the testing phase. In the figure, the ROC curve is plotted with the True Positive Rate on the left vertical axis against the False Positive Rate on the horizontal axis. The True Positive Rate is also referred to as TPR, and the False Positive Rate is also referred to as FPR. If the outcome of the prediction is drowsiness and the current label Lb3 of the third sample s3 is drowsiness, then it is called true positive. However, If the outcome of the prediction is drowsiness but the current label Lb3 of the third sample s3 is non-drowsiness, then it is called false positive.

The diagonal divides the ROC space. Points above the diagonal represent good classification results, whereas points below the line represent bad results.

On the right vertical axis is the cut-off threshold CTH between the TPR and FPR. Figure 10 shows a supplementary curve CR that serves to visually check the TPR and FPR values for each cut-off threshold.

In a non-limitative example illustrated, one obtains a good area under the ROC curve score that is equal to 0.67. Hence, with the area under the ROC curve score metric, one can assess the performance of the Random Forest model to classify the state st of the driver.

The AUC under the ROC is interesting when a second input dataset D2 is unbalanced compared to an accuracy metric. It is the case here, as in a non-limitative example, for a second input dataset D2, there are about 18,8°/ of drowsy observations and 81.2% of non-drowsy observations as mentioned before.

Another way to look for the results of the testing, is to look for a Confusion matrix obtained during the testing phase. A non-limitative example of Confusion matrix obtained is illustrated in figure 11. The Confusion matrix illustrated the global performances of the RF model that has been trained regarding the True Negative also referred to as TN, the False Positive also referred to as FP, the False Negative also referred to as FN and the True Positive also referred to as TP. As the classification performed by the RF model is a binary classification (drowsy, non-drowsy), the confusion matrix is of dimension 2x2.

Hence, one has :

- the TP is the total counts having both predictions and current labels that are drowsy. The TP is also called sensitivity.
- the TN is the total counts having both predictions and current labels that are non-drowsy. The TN is also called specificity.
- the FP is the total counts having predictions that is drowsy while actually the current label is non-drowsy,
- the FN is the total count having predictions that is non-drowsy while actually the current label Lb3 is drowsy.

In a non-limitative embodiment, in order to reduce the false positives FP, one filters the second outputs O2 of the third computer-implemented method 3. It is done through a fourth computer-implemented method 4 illustrated in figure 12. Said fourth computer-implemented method 4 comprises :

- a step E40 illustrated F40(O2, i1) of acquiring the second outputs O2 during a second filtering duration t1, and
- a step E40 illustrated F40(O2, Th4, wInF2) of sending a second warning information wInF2 if the number of second outputs O2 are the drowsy state st1 is above a second filtering threshold Th4.

The steps of this fourth computer-implemented method 4 are performed by an electronic device PC such as a personal computer or a server.

In a non-limitative embodiment, the second filtering duration t1 is 13.4 seconds. In a non-limitative embodiment, the second filtering threshold Th4 is 67. Hence, after 67 predictions O2 that are the drowsy state st1, one is sure that the driver is drowsy. So, for his/her safety and the other passenger's safety, a second warning information wInF2 is sent. In a non-limitative embodiment, the second warning information wInF2 is sent to a human interface machine of the electronic device PC, such as in a non-limitative example a screen.

These steps permit to drastically reduce the false positives FP. Hence, in the Confusion matrix, with this embodiment, one obtains only 6,62% of false positives FP.

As can be seen in figure 11, among a total of 462 second global drowsiness probability, one has 367 TN, 26 FP, 58 TP and 11 TP. In terms of percentage, it corresponds respectively to 93.38% of specificity, 6.62% of FP, 15.94% of FN and 84.06% of sensitivity. Hence, the TN and the TP have good percentages. It means that the training of the RF model has some good performances for the application mentioned. It is efficient in detecting the state st of the driver.

Hence, the testing phase ensures a very low percentage of false positives FP.

In a non-limitative embodiment illustrated in figure 13, the second input dataset D2 is split into folds according to a K-fold learning process well-known by the person skilled in the art, so as to obtain a first data subset D2.1 and a second data subset D2.2 with folds. The folds are also called K-folds. In a non-limitative embodiment, the second input dataset D2 is split into four K-folds $K_1$, $K_2$, $K_3$, $K_4$.

In order to avoid overfitting, in a non-limitative embodiment, the RF model is trained a plurality of times with different second data subsets D2.2, and the RF model is evaluated a plurality of times with different first data subsets D2.1. In a non-limitative variant of embodiment, three K-folds are training K-folds and one fold is an evaluating K-fold. It means that the first data subset D2.1 comprises one fold and the second data subset D2.2 comprises three folds. Hence, the training phase comprises a training sub-phase and an evaluation sub-phase.

In a non-limitative variant of embodiment, the RF model is trained four times and evaluated four times. Hence, steps E20 to E24 are repeated three times for the training phase after a first pass through. The evaluation phase is the same as the testing phase but with the second input data subsets D2.1 instead of the third input dataset D3. Hence, the same steps as E30 to E34 are repeated three times for the evaluation phase after a first pass through.

Hence, in a non-limitative example of figure 13 :

- for a first pass through, the second input data subset D2.2 comprising the training K-folds $K_2$, $K_3$, $K_4$ is used, and for the following evaluation phase, the second input data subset D2.1 that is the evaluating K-fold $K_1$ is used,
- for a second pass through, the second input data subset D2.2 comprises the training K-folds $K_1$, $K_3$, $K_4$, and for the following evaluation phase, the second input data subset D2.1 that is the evaluating K-fold $K_2$,
- for a third pass through, the second input data subset D2.2 are respectively the training K-folds $K_1$, $K_2$, $K_4$, and for the following evaluation phase, the second input data subset D2.1 that is the evaluating K-fold $K_3$ is used,
- for a fourth pass through, the second input data subset D2.2 are respectively the training K-folds $K_1$, $K_2$, $K_3$, and for the following testing phase, the second input data subset D2.1 that is the evaluation K-fold $K_4$ is used.

As a result of the four training rounds, one obtains four different RF models referred to as $RF_1$, $RF_2$, $RF_3$, $RF_4$ in figure 13. It is to be noted that the same hyperparameters Hp are used for the K-fold learning process.

Hence, as a result of the four evaluation rounds, one obtains four different AUCROC score metrics illustrated $AUCROC_1$, $AUCROC_2$, $AUCROC_3$, $AUCROC_4$, for respectively the four RF models $RF_1$, $RF_2$, $RF_3$, $RF_4$ but with a same set of hyperparameters Hp.

At the end of the training phase, one obtains a global score $AUCROC_0$ that is the sum of the two middle AUCROC score metrics after sorting them into an increasing order (from the smallest area under the curve to the largest one). Hence, one discards the two extreme AUCROC score metrics. The global score $AUCROC_0$ is between 0 and 1. In a non-limitative embodiment, only the AUCROC score metrics between 0.0 and 0.2 are retained for the computation of the global score $AUCROC_0$ before the sorting. It limits the False Positive FP rate while maximizing the True Positive rate

In order to have the best inference RF model for classifying the state of a driver, one trains an RF model with different sets of hyperparameters Hp, then once the RF models are constructed, one compares the different global scores $AUCROC_0$ obtained at the end of the evaluation. One can choose the RF model with the hyperparameters Hp that has the best result for the classification.

Afterwards, one can test the RF model according to the third computer-implemented method 3 as described before. With the testing, one tests if the RF model chosen in the end complies with requirements of FP rate and of TP rate. In a non-limitative example, the requirements are a False Positive Rate of less than 0.1 (10%) and a True Positive Rate of more than 0.8 (80%). The RF model is tested with testing features f3 that it has never seen before.

In order to choose the hyperparameters to be applied to the RF model to be trained, in a non-limitative embodiment, the hyperparameters Hp are adjusted according to a genetic method.

It is to be noted that the Random Forest model is intended to be embedded in the vehicle. Therefore, it is intended to run on a constrained hardware configuration, such as the electronic control unit ECU of the vehicle. The aim of the genetic method is to obtain better performances while having constraints such as the number of nodes N within a decision tree T or the depth of a decision tree T. The higher the number of nodes N is, or the higher the depth is, the higher the memory space to store the Random Forest model will be, and the higher the CPU needed to train the RF model and to run the inference model will be.

As there is a huge number of possible combinations of hyperparameters Hp, one can't test all the combinations on the Random Forest model.

For example, if one gets for the hyperparameters Hp :

- from 1 to 10 features out of 14 features,
- 1 to 120 decision trees T,
- 1 to 12 for the maximum depth,
- criterion Entropy or Gini,

that gives 15913x120x12x2 = 45 829 440 possibilities. It is to be noted that the values 15913 (all possible combinations of features among the 14 features), 120, 12, 2 is a combination of the different hyper-parameters values.

There are a maximum of possibilities to be tested according to the CPU memory space available. Hence, one wants to find the best solutions while testing as few as possible. The genetic method achieves this goal. The genetic method allows a local optimization of the hyperparameters Hp. It means that the genetic method permits to select at least one solution that is the best among the others. When it finds the best solution, it explores its neighbors and keeps the best among the best. As it doesn't test all the possibilities, one ensures that the best found solution doesn't have better neighbors : it means that it is a local optimization.

A genetic method uses species, and is based on a fitness function and on one or a plurality of mutation functions. A classic genetic method is used, but the species, the fitness function and the mutation functions are adapted to the application of detection of the drowsiness state st1 and non-drowsiness state st2 of a driver. A classic genetic method being well-known by the person skilled in the art, it is not described in detail here. The species, the fitness function and the mutation function used for the application of detection of the drowsiness state st1 and non-drowsiness state st2 of a driver are described below.

The genetic method takes as species a set of hyperparameters Hp.

In a non-limitative embodiment, the set of hyperparameters Hp comprises the following hyperparameters Hp:

- a maximum depth Hp.1,
- a number of trees Hp.11,
- a random seed Hp.8 set to 0
- an optimization criterion Hp.12,
- a set of training features f2.

Figure 14 illustrates non-limitative examples of species. Each species has the format with attributes : Hp.11_Hp.1_Hp.8_Hp.12_values of each training feature f2 among a number Hp.4. In a non-limitative embodiment, the number HP.4 is up to 10. One attribute in the combination is a hyperparameter Hp. For example, one has a species 4_32_0_g_1549BC, with Hp.1=4, Hp.11=32, Hp.8=0, Hp.12=g for Gini, and 6 values 1, 5, 4, 9, B, C for the training features f2. In another example, one has a species 6_42_0_e_42137C, with Hp.1=6, Hp.11=42, Hp.8=0, Hp.12=e for Entropy, and 6 values 4, 2, 1, 3, 7, C for the training features f2.

In a non-limitative embodiment, there are about 15 generations constituted of 50 species.

In a non-limitative embodiment, the fitness function is based on a K-fold process on the second input database D2. One obtained four AUCROC score metrics.

The fitness function is obtained as follows.

Firstly, one retains the AUCROC score metrics between 0.0 and 0.2 in the abscissa axis as illustrated in figure 10. It limits the False Positive FP rate while maximizing the True Positive rate.

Secondly, one sorts the four AUCROC score metrics in an increasing order, that is to say one sorts from the smallest area under the curve to the largest one between 0.0 and 0.2.

Thirdly, one calculates the sum of the two middle AUCROC score metrics. This sum is the result of the fitness function for a species. It avoids the problem of overfitting compared to the two extreme AUCROC score metrics.

In a non-limitative embodiment, the mutation function used is a random modification of one or multiple attributes of a species. It permits to look for species that are neighbors to the current species and see if their result is better, that is to say if their fitness function is better.

A mutation is an event that can happen with a low probability (in a non-limitative example a probability of 5%) that causes one or multiple attributes to change. The mutation can impact the maximum depth Hp.1, the number of decision trees Hp.11, the optimization criterion Hp.12 or the training features f2. In a non-limitative example, if the initial species is 4_32_0_g_1549BC, the new specie created is 4_42_0_g_1549BCA where the number of decision trees Hp.11 equal to 32 and one value of a training feature f2 equal to C have mutated into respectively 42 and A.

It is to be understood that the present invention is not limited to the aforementioned embodiments and variations and modifications may be made without departing from the scope of the invention. In this respect, the following remarks are made. All statements herein reciting principles, aspects, and embodiments of the invention, as well as specific examples thereof, are intended to encompass equivalents thereof.

Hence, in a non-limitative embodiment, before running the inference RF model, there is a deactivation of the Random Forest model during a first time duration when the vehicle yaw rate is above a yaw rate threshold. Indeed, in this case, one is sure that the driver is not drowsy, so it is not necessary to run the inference RF model.

Hence, in a non-limitative embodiment, before running the inference RF model, there is a deactivation of the Random Forest model during a second time duration when the vehicle blinker signal is activated. Indeed, in this case, one is sure that the driver is not drowsy, so it is not necessary to run the inference RF model.

Hence, in a non-limitative embodiment, further features f1 can be computed such as in non-limitative examples :

- a feature f1 based on the steering wheel angle that is the number of micro-steering corrections relative to a second threshold,
- a feature f1 based on the yaw rate that is a value of the yaw rate relative to a third threshold depending on a configuration of the road,
- a feature f1 based on the lateral acceleration that is a movement in the lateral acceleration,
- a feature f1 based on the blinker's signal of the vehicle that is a change in the vehicle's trajectory,
- a feature f1 based on the road left lane' signal of the road where the vehicle is, that is a leave of the left lane with or without turning indicator,
- a feature f1 based on the road right lane' signal of the road where the vehicle is, that is a leave of the right lane with or without turning indicator. The same list can be applied for further training features f2 and further testing features f3.

Hence, some embodiments of the invention may comprise one or a plurality of the following advantages:

- it permits a low foot-print model that can be embedded on the vehicle board, that is to say, there is less resource consumption such as in a non-limitative example the occupancy rate of the CPU used, the memory usage. For example, the Random Model inference described runs on a 32bits tricore CPU with less than 5% of occupancy rate and used less than 1MégaBytes of a ROM (Read Only Memory),

- it permits to obtain a detection of the state st of a driver with good performances,

- thanks to the use of the Random Forest model for the detection of the state st of a driver, one doesn't need additional equipment in the vehicle like a driver monitoring system camera for monitoring the driver's face, or a sensor to capture biological signals to provide security to the driver. One only needs the vehicle signals and a frontal exterior camera (for the lanes' signals),

- it permits to reduce the cost of the detection, as one reduces the number of equipment needed,

- it is a solution that is based on real world dataset and not on simulator or synthetic data. This means the performances obtained are based on a real scenario with real driving environment, which is more robust than systems based on synthetic or artificial data,

- it is a solution that solves the problem of classical driver monitoring systems that only meets specific conditions for a specific dataset. With the use of a machine learning model such as the Random Forest model, the features are data patterns that are used as input so that the RF model can learn on these data patterns. Moreover, the RF model is not limited to a given vehicle and thus the first computer-implement method 1 can be embedded inside different types of vehicles.

**Claims**

1. A first computer-implemented method (1) to detect a state (st) of a driver of a vehicle among a drowsiness state (st1) and a non-drowsiness state (st2), said first computer-implemented method (1) comprising :

    - receiving as an input by a Random Forest model a first input dataset (D1) comprising features (f1) based on first data (d1),
    - processing first samples (s1) of said features (f1) through a plurality of decision trees (T) of said Random Forest model (RF), said decision trees (T) comprising nodes (N) and corresponding hyperparameters (Hp),
    - generating by said Random Forest model (RF) first outputs (O1) that are a classification of the driver's state (st) among the drowsiness state (st1) and the non-drowsiness state (st2).

2. A first computer-implemented method (1) according to claim 1, wherein said first data (d1) are :

    - a vehicle speed (d1.1), and/or
    - a vehicle steering wheel angle (d1.2), and/or
    - a vehicle brake pedal pressure (d1.3), and/or
    - a vehicle acceleration pedal pressure (d1.4), and/or
    - a vehicle lateral acceleration (d1.5), and/or
    - a vehicle position on a road lane (d1.6).

3. A first computer-implemented method (1) according to any of the preceding claims, wherein said features (f1) computed are among :

    - a first feature (f1.1) based on the vehicle speed that is a speed change rate,
    - a second feature (f1.2) based on the vehicle speed that is a speed variation,
    - a third feature (f1.3) based the vehicle steering wheel angle that is a steering wheel rotation amplitude,
    - a fourth feature (f1.4) based on the vehicle steering wheel angle that is the steering wheel movements variation,
    - a fifth feature (f1.5) that is based on the vehicle steering wheel angle that is a maximum energy applied on the steering wheel,
    - a sixth feature (f1.6) based on the vehicle brake pedal pressure that is a brake pressure force mean,
    - a seventh primary feature (f1.7) based on the vehicle brake pedal pressure that is the brake pressure rate,
    - a eighth feature (f1.8) based on the vehicle brake pedal pressure rate that is the variations of pressure on the brake pedal,
    - a ninth feature (f1.9) based on the vehicle acceleration pedal pressure that is a frequency of alternating between the brake and accelerator pedals,
    - a tenth feature (f1.10) based on the vehicle accelerator pedal pressure rate that is the variations of pressure on the accelerator pedal,
    - a eleventh feature (f1.11) based on the vehicle accelerator pedal pressure rate that is the mean force applied on the accelerator pedal,
    - a twelfth feature (f1.12) based on the vehicle position on a road lane that is the vehicle position variations on the lane,
    - a thirteenth feature (f1.13) based on the vehicle position on a road lane that is the mean vehicle position on the lane,
    - a fourteenth feature (f1.14) based on the duration of the drive that is a timestamp.

4. A first computer-implemented method (1) according to any of the preceding claims, wherein said hyperparameters (Hp) are:

    - a maximum depth between 2 and 3,

- a minimum samples split set to 2,
- a minimum samples leaf set to 1,
- a maximum features set to 10,
- a maximum leaf nodes set to unlimited,
- a boostrap set to true,
- an oob_score set to false,
- a random seed set to 0,
- a number of jobs set to none,
- weights set to balanced,
- a number of trees set to 31,
- an optimization criterion set to Gini or Entropy.

5. A first computer-implemented method (1) according to any of the preceding claims, wherein said first computer-implemented method (1) further comprises:

- acquiring a plurality of first outputs (O1) during a first filtering duration (t0) and,
- if the number of first outputs (O1) classified as drowsy is above a first filtering threshold (Th0), sending a first warning information (wInF1).

6. A second computer-implemented method (2) of training a Random Forest model (RF) to classify a state (st) of a driver of a vehicle into a drowsiness state (st1) or into a non-drowsiness state (st2), said Random Forest model (RF) comprising a plurality of decision trees (T) with nodes (N) and corresponding hyperparameters (Hp), wherein said second computer-implemented method (2) comprising:

- receiving by the Random Forest model (RF) as an input a second input dataset (D2) of training features (f2), each training feature (f2) being based on training data (d2),
- dividing by the Random Forest model (RF) said second input dataset (D2) into a plurality of subsets of features (d20), said subsets of features (d20) comprising for each training feature (f2) a plurality of data subsamples (sb) and comprising second samples (s2) of training features (f2) that are annotated with a label (Lb2) defining a level of drowsiness,
- for each decision tree (T), random selecting by the Random Forest model (RF) a subset of feature (d20) and constructing said decision tree (T) based on said subset of features (d20),
- for each node (N) of each constructed decision tree (T), selecting by the Random Forest model (RF) a training feature (f2) within the corresponding subset of features (d20) and a split threshold (Th2) in order to minimize an optimization criterion (Hp.12),
- ending the construction of a decision tree (T) when a pure node (Np) is attained when a maximum depth (Hp_1) is attained.

7. A second computer-implemented method (2) according to claim 6, wherein the Random Forest model (RF) comprises a first node (N0) and for said first node (N0), all the data subsamples (sb) of all the training features (f2) are selected.

8. A second computer-implemented method (2) according to claim 6 or claim 7, wherein said second input dataset (D2) of training features (f2) comprises at least two training features (f2) based on training second data (d2) among :

- a vehicle speed (d2.1),
- a vehicle steering wheel angle (d2.2),
- a vehicle brake pedal pressure (d2.3),
- a vehicle acceleration pedal pressure (d2.4),
- a vehicle lateral acceleration (d2.5),
- a vehicle position on a road lane (d2.6).

9. A second computer-implemented method (2) according to any of the preceding claims 6 to 8, wherein said hyperparameters (Hp) are:

- a maximum depth,
- a minimum samples,
- a minimum samples leaf,
- a maximum features,
- a maximum leaf nodes,
- a boostrap,
- an oob_score,
- a random seed,
- a number of jobs,
- weights,
- a number of trees,
- an optimization criterion.

10. A second computer-implemented method (2) according to any of the preceding claims 6 to 9, wherein said training features (f2) are among :

- a first training feature (f2.1) based on the vehicle speed that is a speed change rate,
- a second training feature (f2.2) based on the vehicle speed that is a speed variation,
- a third training feature (f2.3) based the vehicle steering wheel angle that is a steering wheel rotation amplitude,
- a fourth training feature (f2.4) based on the vehicle steering wheel angle that is the steering wheel movements variation,
- a fifth training feature (f2.5) that is based on the vehicle steering wheel angle that is a maximum energy applied on the steering wheel,
- a sixth training feature (f2.6) based on the vehicle brake pedal pressure that is a brake pressure force mean,
- a seventh training feature (f2.7) based on the vehicle brake pedal pressure that is the brake pressure rate,
- a eighth training feature (f2.8) based on the vehicle brake pedal pressure rate that is the variations of pressure on the brake pedal,
- a ninth training feature (f2.9) based on the vehicle acceleration pedal pressure that is a frequency of alternating between brake and accelerator pedals,
- a tenth training feature (f2.10) based on the vehicle accelerator pedal pressure rate that is the variations of pressure on the accelerator pedal,
- a eleventh training feature (f2.11) based on the vehicle accelerator pedal pressure rate that is the mean force applied on the accelerator pedal,
- a twelves training feature (f2.12) based on the vehicle position on a road lane that is the vehicle position variations on the lane,
- a thirteenth training feature (f2.13) based on the vehicle position on a road lane that is the mean vehicle position on the lane,
- a fourteenth training feature (f2.14) based on the duration of the drive that is a timestamp.

11. A second computer-implemented method (2) according to any of the preceding claims 6 to 10, wherein said label (Lb2) is a KSS label.

12. A second computer-implemented method (2) according to any of the preceding claims 6 to 11, wherein said second input dataset (D2) is split into folds according to a K-fold learning process.

13. A third computer-implemented method (3) of testing a Random Forest model (RF) to classify a state (st) of a driver of a vehicle into a drowsiness state (st1) or into a non-drowsiness state (st2), said Random Forest model (RF) comprising a plurality of decision trees (T) with nodes (N) and corresponding hyper-parameters (Hp), wherein said third computer-implemented method (2) comprising:

- receiving a third input dataset (D3) of testing features (f3), each testing feature (f3) being based on testing data (d3),
- for each third sample (s3) of a plurality of testing features (f3), processing said third sample (s3) through the plurality of decision trees (T) of the Random Forest model (RF) so as to obtain one probability (P) per each decision tree (T), a third sample (s3) comprising one subsample (sb) of each testing features (f3) and being annotated with a label (Lb3) defining a level of drowsiness,
- for each sample (s), computing a global probability (Pm) as the mean probabilities (P) of all the decision trees (T) of the Random Forest model (RF),
- for each third sample (s3), comparing the global probability (Pm) to a final threshold (Th3),
- upon said comparison, for each third sample (s3), outputting a second output (O2) that is a prediction of the state (st) of the driver,
- based on the second outputs (O2) obtained for all the third samples (s3), calculate the area under the ROC curve metric.

14. A fourth computer-implemented method (4) of filtering the second outputs (O2) obtained from third computer-implemented method (3), wherein said fourth computer-implemented method (4) comprises:

- acquiring the second outputs (O2) during a second filtering duration (t1), and
- sending a second warning information (wlnF2) if the number of second outputs (O2) are the drowsy state (st1) is above a second filtering threshold (Th4).

F00(ECU, d1) — E00

F01(ECU, d1, f1) — E01

1

F11(RF, d1(f1)) — E11

F12(RF(T), T(N, Hp), s1(f1)) — E12

F13(O1, CI, st(st1, st2)) — E13

F14(O1, t0) — E14

F15(O1, Th0, wlnF1) — E15

## Fig. 1

D1

f1.1
f1.2
f1.3
f1.4
d1.1 → f1.5
d1.2 → f1.6
d1.3 → f1.7
d1.4 → f1.8
d1.5 → f1.9
d1.6 → f1.10
f1.11
f1.12
f1.13
f1.14

## Fig. 2

D2

f2.1
f2.2
f2.3
f2.4
d2.1 → f2.5
d2.2 → f2.6
d2.3 → f2.7
d2.4 → f2.8
d2.5 → f2.9
d2.6 → f2.10
f2.11
f2.12
f2.13
f2.14

## Fig. 5

D3

f3.1
f3.2
f3.3
f3.4
d3.1 → f3.5
d3.2 → f3.6
d3.3 → f3.7
d3.4 → f3.8
d3.5 → f3.9
d3.6 → f3.10
f3.11
f3.12
f3.13
f3.14

## Fig. 9

F02(PC, d2) —— E02

F03(PC, d2, D2(f2)) —— E03

2 ——

F20(RF, D2, f2(Lb2)) —— E20

F21(RF, D2, d20(sb)) —— E21

F22(RF, T, d20) —— E22

F23(RF, N, f2(d20), Th2, Hp.12))

F230(RF, Th2) —— E231

F231(RF, Sb, Lb2) —— E232

F232(RF, Th2) —— E233

—— E23

F24(RF, T, Np, Hp.1) —— E24

## Fig. 3

Hp.1 ; Hp.2 ; Hp.3 ; Hp.4 ; Hp.5 ; Hp.5 ; Hp.6; Hp.7 ;
Hp.8 ; Hp.9 ; Hp.10 ; Hp.11 ; Hp.12

N0

N1.1    N1.2

N2.1    N2.2    N2.3    N2.4

L3.1    L3.2    L3.5    L3.6

L3.3    L3.4    L3.7    L3.8

Fig. 4

| | f2.1 | f2.2 | f2.3 | f2.4 | f2.5 | f2.6 |
|---|---|---|---|---|---|---|
| $s2_1$ | 10 | 3,5 | 3 | 1 | 5 | 0 |
| $s2_2$ | 8 | 1 | 7 | 0 | 2 | 2 |
| $s2_3$ | 4 | 1 | 7 | 0 | 3 | 3,5 |
| $s2_4$ | 12 | 5 | 7 | 1 | 0 | 0 |
| | 5 | 14 | 0 | 0 | 4 | 6 |

Fig. 6

Hp.1 ; Hp.2 ; Hp.3 ; Hp.4 ; Hp.5 ; Hp.5 ; Hp.6; Hp.7 ;
Hp.8 ; Hp.9 ; Hp.10 ; Hp.11 ; Hp.12

⇩

f2.3 <=0.5 ; th2=0.5
gini=0.5
sb =213692
V=[168951, 44741]

N0

N1.1

f2.1 <=1,36 ; th2=1.36
gini=0.5
sb =193916
V=[151240, 42676]

N1.2

f2.4 <=11.5 ; th2=11.5
gini=0.16
sb =19776
V=[17710, 2066]

N2.2

f2.8 <=21.5 ; th2=21.5
gini=0.37
sb =148876
V=[113641, 35235]

N2.3

f2.4 <=0.5 ; th2=0.5
gini=0.5
sb =482
V=[314, 168]

N2.1

f2.3 <=6.5 ; th2=6.5
gini=0.13
sb =45040
V=[42218, 2822]

N2.4

f2.1 <=19.26 ; th2=19.26
gini=0.13
sb =19294
V=[17334, 1960]

## Fig. 7a

**N2.1**

f2.3 <=6.5 ; th2=6.5
gini=0.47
sb=45040
V=[42218, 2822]

**N2.2**

f2.8 <=21.5 ; th2=21.5
gini=0.49
sb =148876
V=[113641, 35235]

**L3.1**

gini=0.45 ; th2=0.45
sb =42218
V=[35589, 6629]

**L3.2**

gini=0.47 ; th2=0.47
sb =2822
V=[2009, 813]

**L3.3**

gini=0.49 ; th2=0.49
sb =119599
V=[97645, 21954]

**L3.4**

gini=0.3 ; th2=0.3
sb =29277
V=[15995, 13282]

Fig. 7b

**N2.3**

f2.4 <=0.5 ; th2=0.5
gini=0.5
sb =482
V=[314, 168]

**N2.4**

f2.1 <=19.26 ; th2=19.26
gini=0.13
sb =19294
V=[17334, 1960]

**L3.5**

gini=0.18
sb =314
V=[279, 35]

**L3.6**

gini=0.34
sb =168
V=[96, 72]

**L3.7**

gini=0.07
sb=18131
V=[16397, 1734]

**L3.8**

gini=0.5
sb=1163
V=[936, 227]

Fig. 7c

F04(PC, d3) — E04

↓

F05(PC, d3, D3(f3)) — E05

↓

F30(RF, D3, f3(Lb3)) — E30

↓

F31(RF, s2, T(P)) — E31

↓

F32(PC, Pm) — E32

↓

F33(PC, Pm, Th3) — E33

↓

F34(PC, 02, AUCROC) — E34

3

## Fig. 8

D3

| | f3.1 | f3.2 | f3.3 | f3.4 | f3.5 | f3.6 | |
|---|---|---|---|---|---|---|---|
| $s3_1$ | 9 | 2,5 | 4 | 2 | 6 | 0 | RF |
| $s3_2$ | 7 | 2 | 6 | 0 | 3 | 3 | RF |
| $s3_3$ | 5 | 2 | 8 | 0 | 4 | 2,5 | RF |
| $s3_4$ | 13 | 6 | 8 | 2 | 1 | 0 | RF |
| $s3_5$ | 6 | 15 | 1 | 0 | 5 | 7 | RF |

$sb_1$ $sb_2$ $sb_3$ $sb_4$ $sb_5$ $sb_6$

## Fig. 9

ROCAUC = 0.67

Fig. 10

| | st2 | st1 |
|---|---|---|
| st2 | TN=367 93.38% | FP=26 6.62% |
| st1 | FN=11 15.94% | TP=58 84,06% |

Fig. 11

4

F40(PC, O2, i1) — E40

F41(PC, O2, TH4, wInF2) — E41

## Fig. 12

D2.1 → $AUCROC_1$

| $K_1$ | $K_2$ | $K_3$ | $K_4$ |

D2.2 → $RF_1$

D2.1 → $AUCROC_2$

| $K_1$ | $K_2$ | $K_3$ | $K_4$ |

D2.2 → $RF_2$

D2.1 → $AUCROC_3$

| $K_1$ | $K_2$ | $K_3$ | $K_4$ |

D2.2 → $RF_3$

D2.1 → $AUCROC_4$

| $K_1$ | $K_2$ | $K_3$ | $K_4$ |

D2.2 → $RF_4$

## Fig. 13

4_32_0_g_1549BC    10_86_0_e_987123645BD    5_65_0_e_328BD64    3_37_0_g_3649BC

1_12_0_g_AB    8_71_0_g_625DCA39    6_42_0_e_42137C    2_21_0_g_15463

## Fig. 14

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 23 21 0822

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/308656 A1 (SHIN SANG-MIN [KR] ET AL) 10 October 2019 (2019-10-10) | 1-3,5 | INV. B60W40/08 |
| A | * paragraphs [0028], [0050] - [0052] * | 4 | |
| | - - - - - | | |
| A | JP 2022 123349 A (ASAHI KASEI CORP) 24 August 2022 (2022-08-24) * paragraph [0054] * | 4 | |
| | - - - - - | | |
| A | US 2022/203996 A1 (KATZ ITAY [IL]) 30 June 2022 (2022-06-30) * the whole document * | 1-5 | |
| | - - - - - | | |

**TECHNICAL FIELDS SEARCHED (IPC)**

B60W

### INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 24 May 2024 | Stolle, Martin |

EPO FORM 1503 03.82 (P04E07)

Europäisches
Patentamt

European
Patent Office

Office européen
des brevets

**INCOMPLETE SEARCH
SHEET C**

Application Number

EP 23 21 0822

Claim(s) completely searchable:
    1-5

Claim(s) not searched:
    6-14

Reason for the limitation of the search:

In response to a Rule 62a EPC communication, the Applicant indicated
claims 1 - 5 to be searched. Accordingly, claims 6 - 14 were not searched
and are to be removed from the application.

## ANNEX TO THE EUROPEAN SEARCH REPORT
## ON EUROPEAN PATENT APPLICATION NO.

EP 23 21 0822

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2024

| Patent document cited in search report | Publication date | Patent family member(s) | Publication date |
|---|---|---|---|
| US 2019308656 A1 | 10-10-2019 | KR 20180070317 A | 26-06-2018 |
| | | US 2019308656 A1 | 10-10-2019 |
| | | WO 2018110837 A1 | 21-06-2018 |
| JP 2022123349 A | 24-08-2022 | NONE | |
| US 2022203996 A1 | 30-06-2022 | US 2022203996 A1 | 30-06-2022 |
| | | WO 2022144839 A1 | 07-07-2022 |

EPO FORM P0459

For more details about this annex : see Official Journal of the European Patent Office, No. 12/82